# EUROPEAN PATENT APPLICATION

(11) **EP 2 198 722 A1**
(43) Date of publication of application: **23.06.2010**
(21) Application number: 09252813.2
(22) Date of filing: 17.12.2009
(51) Int. Cl.: A23L 1/00, A23L 1/0562, A23L 1/187, A23L 1/275

(54) **Whipped gelatin desserts**

(30) Priority: 18.12.2008 US 338924
(71) Applicant: Kraft Foods Global Brands LLC, Northfield, IL 60093 (US)
(72) Inventor: Leshik, Richard R., Brookfield Connecticut 06804 (US); Wang, Hank Daumin, New City New York 10956 (US)
(74) Representative: Setna, Rohan P.

(57) **Abstract**

Whipped gelatin desserts including water, sweetener, about 2 percent or less fat and about 0.75 to about 2 percent gelling hydrocolloid are provided. The whipped desserts do not contain significant amounts of additional emulsifiers, foaming agents, stabilizers, or gelling agents, but remain refrigerator-stable for at least three months.

## Description

### FIELD

The present invention relates to whipped gelatin desserts and, in particular, to no-fat and low-fat whipped gelatin desserts.

### BACKGROUND

Consumers have in recent times been desirous of foods that are ready-to-eat. This is particularly true in the categories of snacks and desserts. Thus, packaged desserts, especially in single-service packaging, of gels and puddings have become quite popular. These products must be formulated and processed in a manner as to be stable for a period of at least three months in order to accommodate commercial distribution, sale, and use cycles.

U.S. Patent No. 6,117,473 describes a non-dairy foamable composition suitable for use as, or in, a ready-to-eat dessert comprising water, sweetener, 2 to 30 percent fat such as hydrogenated vegetable oil (e.g., coconut oil, palm kernel oil), 0.05 to 1 percent non-ionic emulsifier having an HLB of at least 10 (e.g., polysorbate 60, sucrose fatty acid esters), and 0.3 to 2 percent gelling hydrocolloid (e.g., gelatin) having a gel temperature below 80°F. The composition could be foamed using conventional foaming techniques to produce a foam having an overrun of about 50 to about 350 volume percent. The resulting foam was refrigerator stable for a period of at least three months and, thus, suitable for use in ready-to-eat desserts. This foam required significant levels of fat (up to about 30 percent) and an emulsifier having a HLB of at least 10 to product a shelf-stable foam.

Consumers are also becoming aware of a product's ingredient line, and desiring more simple products with fewer non-natural ingredients. To meet this demand, products are often formulated to remove or decrease such non-natural ingredients. However, in many cases, it is not possible to reduce or remove non-natural ingredients and retain the same characteristics and organoleptic qualities desired in the final product. This problem has been the case with the non-dairy foamable products, such as those in U.S. Patent No. 6,117,473, where it has been discovered that fats will not fully emulsify with no or reduced levels of the polysorbate 60 or sucrose fatty acid esters added as emulsifiers. Such products have a loose or large air cells and will generally collapse upon storage.

It would be desirable to prepare foamable compositions and foam resulting therefrom having reduced levels of non-natural ingredients. For example, it would be desirable to prepare such a foamable composition and foam resulting therefrom preferably without the use of additional emulsifiers, foaming agents, stabilizers, and/or gelling agents.

### SUMMARY

A whipped or aerated dessert is provided having an overrun of at least about 25 to about 100 percent that relies solely on a gelling hydrocolloid alone to provide emulsification, foam stability and gelling at the same time, and the whipped or aerated dessert is substantially free of emulsifiers, foaming agents, stabilizers, and other gelling agents, but still retains its overrun for at least about three months. By one approach, the aerated dessert includes water; about 2 percent or less fat (in some cases, it is preferred to be less than about 2 percent fat), and about 0.75 to about 2 percent gelling hydrocolloid. In one aspect, it has been discovered that a stable whipped dessert can be formed without significant levels of emulsifiers if the level of fat is maintained below about 2 percent and if the fat-to-gelling hydrocolloid ratio is about 2.7:1 or less. With higher levels of fat, the dessert will not maintain a stable overrun without significant use of emulsifiers.

By another approach, a fat-free aerated dessert is provided that also has an overrun of at least about 25 to about 100 percent. The fat-free aerated dessert may include water; about 0.75 to about 2 percent gelling hydrocolloid effective alone to provide emulsification, structural foam stability, and gelling all at the same time; and preferably, about 0.01 to about 0.5 percent whitener. The fat-free aerated dessert is substantially free of emulsifiers, foaming agents, stabilizers, and other gelling agents but still retains an overrun of at least about 25 to about 100 percent for at least about three months.

A method of forming a whipped dessert is also provided. By one approach, the method first forms a composition by blending together water, 0 to about 2 percent fat, and about 0.75 to about 2 percent of a gelling hydrocolloid having a gel temperature of about 80°F or below at the particular concentration and bloom. If the composition includes fat, then it is homogenized. If the composition does not include fat, then the composition is preferably not homogenized. Next, the composition is pasteurized, and then cooled below the gel temperature. The cooled, pasteurized composition is maintained below the gel temperature until the pasteurized composition begins to get viscous. Next, the viscous composition is then whipped (preferably with high shear) to an overrun of at least about 25 to about 100 volume percent to form the whipped dessert. The blended composition is substantially free of emulsifiers, foaming agents, stabilizers, or other gelling agents such that the gelling hydrocolloid alone forms and stabilizes the whipped dessert so that it retains at least about 25 to about 100 percent overrun for at least about three months.

### DETAILED DESCRIPTION

In general, non-dairy foam compositions are provided having a gelling hydrocolloid that alone functions as a whipping agent, stabilizing agent, and emulsifying agent all in one ingredient so that substantially no other emulsifiers, foaming agents, stabilizers, or gelling agents are required. By one approach, a no-fat foam composition and a low-fat foam composition are provided, wherein a gelling hydrocolloid, such as gelatin, alone is used to form and stabilize the foam. Thus, the low-fat or no-fat foam compositions do not require, and preferably do not contain, any additional emulsifiers, foaming agents, stabilizers, and/or gelling agents.

In one aspect, the no-fat foam composition has an overrun of about 25 to about 100 volume percent, and includes water, sweetener, and about 0.75 to about 2 percent gelling hydrocolloid, wherein the foam composition does not contain significant amounts of additional emulsifiers, foaming agents, stabilizers, or gelling agents, and wherein the foam composition is refrigerator-stable for at least about three months. In another aspect, the low-fat foam composition has an overrun of about 25 to about 350 volume percent (in some cases, about 25 to about 100 volume percent), and includes water, sweetener, about 2 percent or less fat (preferably, less than about 2 percent fat and, in some cases, about 1.5 percent or less), and about 0.75 to about 2 percent gelling hydrocolloid, wherein the foam composition does not contain significant amounts of additional emulsifiers, foaming agents, stabilizers, or gelling agents, and wherein the foam composition is refrigerator-stable for at least about three months. The disclosure also relates to methods of making such no-fat and low-fat foam compositions wherein gelatin alone is used to form and stabilize the foam. In a preferred form, the non-dairy whipped desserts are formed substantially free of dairy proteins or dairy-derived protein material, such as sodium caseinate and the like.

For purposes herein, the requirement that the foam composition does not contain significant amounts of or is substantially free of additional emulsifiers, foaming agents, stabilizers, or gelling agents is intended to mean that any such functional agents are, if present at all, at insignificant levels where they essentially have no physical or organoleptic effects on the foam composition. By one approach, any additional functional agents may be present at levels of less than about 0.05 percent (in some cases, less than about 0.01 percent) and, preferably, the foams herein are free of these additional functional ingredients. In other words, such functional agents may only be present at insignificant levels where the functional effects normally associated with the agents can not be observed in the aerated dessert. This can easily be determined by preparing aerated desserts with and without such insignificant additional functional agents; if the aerated desserts with and without such insignificant additional functional agents are essentially the same in physical and organoleptic properties (i.e., they are essentially identical from a consumer's viewpoint and produce a stable foam), then the insignificant amount of such additional functional agents does not provide a functional benefit. Of course, it is preferred that no addition of these functional agents be made at all. To this end, the foam compositions described herein preferably include no or only insignificant amounts of non-ionic emulsifiers such as polysorbate 60 and sugar esters (mono, di, and triesters of palmitic and/or stearic acid); insignificant amounts of ionic emulsifiers such as glycerol monostearate, distilled monoglycerides and the like; insignificant amounts of stabilizers/thickeners such as lecithin, sodium carboxymethyl cellulose, agar, carrageenan, guar gum, locust gum, xanthan gum and the like; and insignificant amounts of other whipping/gelling agents such as calcium stearol lactylate, tetrasodium pyrophosphate, carrageenan and the like.

Generally, whipped dessert systems can be very complex, with many additional ingredients required for emulsification and/or stabilization of the whipped product. The ability to utilize a gelling hydrocolloid and, preferably, a single gelling hydrocolloid, as the sole emulsifier, viscosifier, and/or stabilizing agent is surprising and, in particular, that stable foams can still be achieved by utilizing no- or low-fat levels combined with the sole gelling hydrocolloid is contrary to the relatively complex foaming desserts of the prior art. In the whipped dessert systems herein, other functional emulsifiers, foaming agents, stabilizers, or gelling agents are not necessary and preferably are not used. It was previously believed that high levels of fat and emulsifiers were needed to achieve stable foams that could survive the rigors of refrigerated distribution, sale, and use as ready-to-eat desserts. The whipped dessert systems herein are simpler (i.e., contain no and low levels of fat and no emulsifier) than prior desserts, but still provide acceptable stable foams.

Optionally, other ingredients such as texture modifiers, flavors, colors, acidifying agents, and buffering agents could be included in the formulation for their known functionalities so long as they do not significantly or adversely effect the organoleptic properties or the refrigeration stability of the foamed compositions and so long as they have no functional effects as a whipping or foaming agent. In no-fat (containing no added fat) and low-fat (containing about 2 percent or less fat) systems, gelatin by itself functions as a good emulsifier and/or stabilizer at the same time allowing the fat phase to stay uniformly suspended without separation. Furthermore, both the no-fat and the low-fat whipped desserts are stable for at least 90 days in the refrigerator.

By one approach, the general formulations of the aerated desserts described herein are provided in the following table:

| Ingredient | General (%) | No-Fat (%)-Preferred | Low-Fat (%)-Preferred |
|---|---|---|---|
| Fat | 0 - 2 | 0 | <2 |
| Gelling Hydrocolloid | 0.75 - 2 | 1.3 - 1.6 | 1.3 - 1.6 |
| Sweetener | To Taste | | |
| Water | Remainder (at least about 58%, in some cases about 80 to about 98%) | | |
| Additional Emulsifiers, Foaming Agents, Stabilizers, or Gelling Agents* | <0.05(preferred <0.01) | 0 | 0 |
| Texture modifiers | 0 - 2 | 0 | 0 |

| | | | |
|---|---|---|---|
| *Such functional agents can only be present at levels where no functional effects normally associated with the agents can be observed in the aerated dessert. | | | |

By one approach, the gelling hydrocolloid is only provided from a gelatin and, preferably, only a single gelatin source with no significant amounts of other gelling agents. Preferably, the gelatin has a gel temperature of about 80°F or below. Preferably, the gelatin is a Type A or Type B gelatin, such as a 200 to 300 bloom Type A gelatin if the product is acidic and a Type B gelatin if the product is neutral. The amount of the sole gelatin source used is effective (in no- and low-fat compositions) to function as an emulsifying agent, a stabilizer, and a gelling agent all at the same time. Effective amounts may include about 0.75 to about 2 percent and, preferably, about 1.3 to about 1.6 percent. By one approach, the whipped dessert has a fat to gelling hydrocolloid (i.e., fat-to-gelatin) ratio of about 2.7:1 or less (in some cases, about 1:1 or less) and still remains whipped with an overrun of at least about 25 to about 100 percent for at least about three months. In general, higher fat to gelling hydrocolloid ratios (meaning higher levels fat) will not remain stable without the addition of significant amounts of emulsifiers to maintain the desired overrun. Preferably, the gelatin by itself is the only structural element forming the aerated texture of the whipped dessert in contrast to prior formulations where the high levels of fat combined with emulsifiers to maintain the fat stability also were required to form the final structural texture.

The fat, if present, is only at levels of about 2 percent or lower and, preferably, about 1.5 percent or lower. Higher levels of fat will not result in a stable foam without the use of significant amounts of emulsifiers. Preferred fats are generally solid at refrigerated temperatures and, preferably, have a melting point higher than about 80°F (preferably about 80 to about 120°F). Suitable fats may include any hard fats within these temperature ranges, such as but not limited to, vegetable oils including hydrogenated vegetable oils, coconut oils, palm kernel oils, cocoa butter and mixtures thereof. Other hard fats in the above temperature ranges may also work. As mentioned above, the whipped desserts have substantially no or no significant amounts of emulsifiers, foaming agents, stabilizers, and/or selling agents even with fat levels of about 2 percent or less. In some cases, the whipped desserts have a ratio of fat to emulsifier of about 20:1, in other cases about 40:1, and in yet in some instances at least about 200:1 and still remain whipped for at least about three months.

In the no-fat whipped dessert, as mentioned above, a stable foam can be achieved with the gelling hydrocolloid alone in the absence of other emulsifiers, stabilizers, and gelling agents, but such no-fat foam may have a translucent-like appearance. As a result, the no-fat formula (and in some cases, the low-fat formula if desired) may also include an amount of a colorant, such as titanium dioxide or other additive such as a whitener, in order to mimic the optical whiteness and opacity of the traditional high fat foams (i.e., those foams with over 2 percent fats). By one approach, the whipped dessert may also contain about 0.01 to about 1.5 percent colorant.

The whipped dessert also preferably includes a sweetener. The sweetener may be comprised of any natural or artificial sweetener, such as but not limited to, of one or more sugars, such as sucrose, fructose, dextrose, and/or sugar syrups, such as high fructose corn syrup, sugar alcohols, and/ or intensive sweeteners, such as aspartame, acetosulfame, alitame, saccharin, cyclamates, and trichloro sucrose. In the event one or more intensive sweeteners are used, bulking agents may be included in the formulation to provide additional solids and provide body to the foam structure. Typical bulking agents would be maltodextrin, polydextrose, polyglucose, xylitol, mannitol, and sorbitol. For formulation calculations, all of these materials are considered to be included in the sweetener component.

The present disclosure allows provides for a method of developing no-fat and low-fat aerated desserts without the need for functional ingredients besides gelatin. For the low-fat version, the method preferably includes a homogenization step (completed at a temperature above which the fat melts) with gelatin as sole emulsifier for fat levels up to 2 percent is used. For no-fat or fat-free versions, the method of development preferably does not use a homogenization step, and stable foams can be produced without homogenization.

The described whipped desserts will now be illustrated by specific examples which describe preferred embodiments of the whipped desserts. These examples are not intended to limit the scope of the compositions and methods described herein. Unless otherwise indicated, all ratios and percentages throughout this specification are by weight, and the overrun percentages are by volume.

Example 1. This example illustrates the preparation of both a no-fat strawberry gelatin whipped dessert and a low-fat strawberry gelatin whipped dessert. The following formulations were used:

| Ingredient | No-Fat Dessert (%) | Low-Fat Dessert (%) |
|---|---|---|
| Water | 97.5 | 95.7 |
| Coconut/Palm Kemal Oil | 0 | 2.0 |
| Gelatin 290 Bloom Type A | 1.4 | 1.4 |
| Adipic Acid | 0.5 | 0.5 |
| Trisodium Citrate | 0.1 | 0.1 |
| Citric Acid | 0.1 | 0.1 |
| Salt | 0.01 | 0.01 |
| Aspartame | 0.05 | 0.05 |
| AcesulfameK | 0.02 | 0.02 |
| Strawberry Flavor | 0.1 | 0.1 |
| Colorant | 0.21 | 0.01 |

The coconut palm kernel oil had a melting point of between 99 and 103°F and was obtained from Aarhus United USA (Newark, New Jersey). The gelatin was obtained from Atlantic Gelatin (Woburn, Massachusetts) and was a Type A gelatin of approximately 290 bloom. The coconut/palm kernel oil blend had a melting point above 80°F.

The ingredients for the no-fat formulation were blended together at about 150°F until all ingredients were dissolved. The blended no-fat formulation was then pasteurized at a temperature of about 200°F for about 10 seconds. The pasteurized no-fat formulation was then cooled to about 45-55°F and held at that temperature range until the product becomes viscous (generally after about 5-15 minutes). The just-beginning-to-gel no-fat formulation was then whipped using a Mondomix (Haas-Mondomix B.V., Netherlands) high shear device using any type of food grade sterile gas source, typically nitrogen gas to obtain an overrun of about 50 volume percent. The whipped no-fat dessert was then packaged and stored under refrigerated conditions.

The whipped low-fat dessert was prepared using essentially the same procedure as above except that the blended formulation above the melting points of the gelatin and fat (above 150°F) was homogenized at about 2500 psi using an APV Gaulin Homogenizer to form a fine emulsion. The fine emulsion was then pasteurized as above and then processed the same as the no-fat formulation discussed above. The low-fat and the no-fat products essentially looked substantially the same due to the whitener added to the no-fat product to mimic the appearance of homogenized fat. Each product had fine air cells, with a weak gel structure, and looked like a whipped mousse-type product. After three months of storage, both the no-fat and low-fat formulations looked substantially the same as on day one after whipping. Unacceptable product, on the other hand, generally does not have storage stability, meaning the product gets wet looking, air cell size increases, product gets webby (i.e., large air cells) and/or will also collapse and not have air cells at all.

Example 2. This example illustrates the preparation of a low-fat whipped chocolate dessert. The following formulation was used:

| Ingredient | Low-Fat Dessert (%) |
|---|---|
| Water | 89.4 |
| Coconut/Palm Kernal Oil | 1.5 |
| Gelatin 250 Bloom Type B | 1.6 |
| Cocoa | 2.0 |
| Salt | 0.15 |
| Maltitol | 5.0 |
| Sucralose | 0.02 |
| AcesulfameK | 0.007 |
| Flavor | 0.3 |

The coconut/palm kernel oil blend had a melting point of above 80°F and the gelatin had a gelling point of 80°F and was obtained from Atlantic Gelatin. The whipped low-fat dessert was prepared in essentially the same manner as the whipped fat-containing dessert described in Example 1. The blended formulation was homogenized at about 2500 psi using an APV Gaulin homoenizer to form a fine emulsion. The fine emulsion was then ultra high temperature pasteurized at 280°F for about 15 seconds to make microbiologically safe since the product is a neutral pH product and not acidic. Then the pasteurized product was cooled to about 45-55°F. The formulation began to gel after about 5-15 minutes. The just-beginning-to-gel formulation was then whipped using a Mondomix high shear device using nitrogen gas to obtain an overrun of about 50 volume percent. The whipped no-fat dessert was then packaged and stored under refrigerated conditions. This product resembled a chocolate mousse-type product with fine air cells and slightly weak gel structure. It was stable for up to three months.

It will be understood that various changes in the details, materials, and arrangements of the process, formulations, and ingredients thereof, which have been herein described and illustrated in order to explain the nature of the method and resulting whipped desserts, may be made by those skilled in the art within the principle and scope of the embodied method and compositions as expressed in the appended claims.

## Claims

1. An aerated dessert having an overrun of at least about 25 to about 100 percent formed in the absence of emulsifiers, the aerated dessert comprising water; less than about 2 percent fat; about 0.75 to about 2 percent gelling hydrocolloid which is effective alone to provide emulsification, structural foam stability, and gelling all at the same time; a ratio of fat to gelling hydrocolloid of about 2.7:1 or less, and the aerated dessert is substantially free of emulsifiers, foaming agents, stabilizers, and other gelling agents but still retains an overrun of at least about 25 to about 100 percent for at least about three months.

2. The aerated dessert of claim 1, wherein an amount of colorant is added in an amount effective so that the aerated dessert mimics the optical appearance of an aerated dessert having higher amounts of fat.

3. The aerated dessert of claim 1 or claim 2, wherein the aerated dessert is formed in the absence of homogenization.

4. The aerated dessert of claim 1 or claim 2, wherein the aerated dessert is formed with homogenization.

5. The aerated dessert of any of the preceding claims, including about 1.3 to about 1.6 percent of the gelling hydrocolloid.

6. The aerated dessert of any of the preceding claims, wherein the gelling hydrocolloid is a gelatin having a gel temperature below about 80°F.

7. The aerated dessert of any of the preceding claims, wherein the gelling hydrocolloid is a gelatin having a gel temperature below about 80°F and the fat has a melting point of about 80°F or higher.

8. The aerated dessert of any of the preceding claims, wherein the fat is a coconut oil, palm kemal oil, cocoa butter, or combinations thereof.

9. A fat-free aerated dessert having an overrun of at least about 25 to about 100 percent formed in the absence of emulsifiers, the aerated dessert comprising water; about 0.75 to about 2 percent gelling hydrocolloid effective alone to provide emulsification, structural foam stability, and gelling all at the same time; about 0.01 to about 1.5 percent colorant; and the aerated dessert is fat-free and substantially free of emulsifiers, foaming agents, stabilizers, and other gelling agents but still retains an overrun of at least about 25 to about 100 percent for at least about three months.

10. A method of forming a whipped dessert, the method comprising:
forming a composition by blending together water, 0 to about 2 percent fat that is solid at about 40°F or below, and about 0.75 to about 2 percent of a gelling hydrocolloid having a gel temperature of about 80°F or below so that a ratio of the fat to gelling hydrocolloid is about 2.7:1 or less;
pasteurizing the blended composition;
cooling the pasteurized composition below the gel temperature and maintaining the gel temperature of the gelatin until the pasteurized composition begins to get viscous;
whipping the viscous pasteurized composition to an overrun of at least about 25 to about 100 volume percent to form the whipped dessert; and
wherein the composition is substantially free of emulsifiers, foaming agents, stabilizers, or other gelling agents such that the gelling hydrocolloid alone forms and stabilizes the whipped dessert so that it retains at least about 25 to about 100 percent overrun for at least about three months.

11. The method of claim 10, wherein a whitening agent is blended into the composition.

12. The method of claim 10 or claim 11, wherein the composition is fat-free and formed in the absence of homogenization.

13. The method of claim 10 or claim 11, wherein the composition includes the fat and the blended composition is homogenized prior to pasteurization.

14. The method of any one of any one claims 10 - 13 wherein the fat has a melting point of at least about 80°F.

15. The method of any of claims 10 - 14, wherein the gelling hydrocolloid is a gelatin having a gel temperature below about 80°F and the fat has a melting point of about 80°F or higher.
